# EUROPÄISCHE PATENTSCHRIFT

(11) **EP 1 720 755 B1**
(45) Veröffentlichungstag und Bekanntmachung des Hinweises auf die Patenterteilung: **26.01.2011**
(21) Anmeldenummer: 04790306.7
(22) Anmeldetag: 12.10.2004
(51) Int. Cl.: B62D 5/083, F16B 7/02

(54) **VORRICHTUNG ZUM HYDRAULISCHEN BALANCIEREN VON DREHSCHIEBERVENTILEN**
DEVICE FOR HYDRAULICALLY BALANCING ROTARY VALVES
DISPOSITIF D'EQUILIBRAGE HYDRAULIQUE DE VANNES ROTATIVES

(30) Priorität: 25.02.2004 DE 102004009590
(43) Veröffentlichungstag der Anmeldung: 15.11.2006
(73) Patentinhaber: ThyssenKrupp Presta SteerTec GmbH, 40476 Düsseldorf (DE)
(72) Erfinder: JANSSENS, Rolf, 47929 Grefrath (DE)
(74) Vertreter: Lenzing Gerber Stute
(86) Internationale Anmeldenummer: PCT/EP2004/011415
(87) Internationale Veröffentlichungsnummer: WO 2005/080176

(56) Entgegenhaltungen:
- DE-C1- 10 227 983
- DE-C1- 19 517 873

## Beschreibung

Die vorliegende Erfindung betrifft eine Vorrichtung zum hydraulischen Balancieren von Drehschieberventilen für Kraftfahrzeugservolenkungen.

Drehschieberventile von Kraftfahrzeugservolenkungen weisen einen Eingangsschaft auf, der den Drehschieber mit einer Anzahl von Steuernuten trägt. Der Drehschieber wird eng umfasst von einer Steuerbüchse, die Kanäle für das Hydraulikfluid trägt und die drehbar auf dem Drehschieber angeordnet ist. Die Steuerbüchse selbst ist wiederum drehfest mit einem Ausgangsschaft verbunden, der ein mit der Zahnstange kämmendes Ritzel trägt. Der Eingangsschaft und der Ausgangsschaft des Drehschieberventils sind über einen Drehstab miteinander verbunden. Sie sind gegen die Federkraft des Drehstabs, der als Torsionsfeder wirkt, in einem mechanisch begrenzten Winkelbereich gegeneinander verdrehbar. Diese Drehung bewirkt, dass das Hydraulikfluid durch die Steuerbüchse und die Steuernuten des Drehschiebers in eine linke oder eine rechte Versorgungsleitung für einen Servomotor der Lenkung geleitet wird. In der kraftfreien Mittelstellung des Drehschieberventils muss die Druckdifferenz zwischen der linken und der rechten Versorgungsleitung möglichst genau Null sein, damit die Servolenkung nicht in eine bestimmte Richtung lenkt, wenn an dem Eingangsschaft des Drehschieberventils kein Moment anliegt, also der Fahrer über das Lenkrad kein Drehmoment in die Lenkung einleitet.

Um diese Mittelstellung möglichst genau aufzufinden, ist eine hydraulische Balanciervorrichtung erforderlich, die das Servoventil mit externem Fluid beaufschlagt und die zunächst den Drehschieber gegenüber der Steuerbüchse so lange verdreht, bis die Druckdifferenz tatsächlich Null wird. In dieser Stellung wird dann der Eingangsschaft mit dem Drehstab verstiftet, so dass die aufgefundene Mittelstellung fixiert wird. Das Drehschieberventil ist dann zum Einbau in eine Servolenkung bereit.

Vorrichtungen zum hydraulischen Balancieren von Servolenkungen werden beispielsweise von der Firma *James N. Kirby Pty. Ltd.* (Australien) geliefert.

Bei diesen Vorrichtungen ist zur Spannung des Drehschiebers im Bereich eines Lagersitzes eine Anordnung vorgesehen, die zwei radial verfahrbare Schieber aufweist, die jeweils den Lagersitz zu knapp 180°Grad umfassen. Die Schieber werden über den Spannflächen abgewandte T-förmige Führungen nach Art von Keilstangen angetrieben, die in entsprechenden schräg zur Axialrichtung der Vorrichtung geneigten T-förmigen Nuten einer Spannplatte gleitend angeordnet sind. Diese Spannvorrichtung ist in der Herstellung sehr aufwendig und beim Zusammenbau nach einem Werkzeugwechsel sehr empfindlich. Außerdem ist die Spannung des Drehschiebers in den Spannflächen unbefriedigend, da der Radius der Spannflächen dem Lagersitz nicht so genau anzupassen ist, dass eine über den Umfang des Lagersitzes flächige Anlage erfolgt. Eine Übertragung von Drehmomenten ist nur in sehr begrenztem Umfang möglich.

Eine andere Möglichkeit zum Balancieren von Drehschieberventilen zeigt die gattungsgemäße DE 195 17 873 C1. Dort wird ein Drehschieberventil mit einem geschlitzten Anschlussbereich für die Lenksäule beschrieben. Der Anschlussbereich des Drehschiebers wird bei Verbindung mit dem als Klemmschelle ausgebildeten freien Ende der Lenksäule zusammengedrückt und erfasst den Drehstab reibschlüssig. Dieses Ventil wird also beim Einbau zentriert. Der Drehstab ist nicht in dem Drehschieber permanent fixiert. Eine Kennlinie des so balancierten Ventils kann nicht aufgenommen werden.

Die DE 102 27 983 C1 zeigt eine Werkzeugmaschine mit einer geschlitzten konischen Spannzange zur Befestigung eines Werkzeugs an der Maschinenwelle.

Es ist deshalb Aufgabe der vorliegenden Erfindung, eine Balanciervorrichtung für Drehschieberventile zu schaffen, die im Zusammenbau und im Betrieb einfacher zu handhaben ist und die zuverlässiger arbeitet.

Diese Aufgabe wird von einer Vorrichtung mit den Merkmalen des Anspruchs 1 gelöst.

Weil zur Erfassung und Spannung des Eingangsschafts an seinem Lagersitz eine Spannzange vorgesehen ist, wird eine weitgehend flächige Spannung dieses Bauelements ermöglicht, die einen vorteilhaften Sitz in der Vorrichtung sicherstellt. Die Montage des Werkzeugs ist einfacher und damit weniger fehleranfällig durchzuführen.

Dabei ist es vorteilhaft, die Spannzange als einen im Querschnitt konischen Ring auszuführen, der abwechselnd von seinen beiden Stirnseiten her in Axialrichtung geschlitzt ist. Die Spannzange kann dabei insbesondere eine Dicke in Axialrichtung von 13 mm aufweisen, einen Innendurchmesser von 20 mm und eine Wandstärke, die von 2,5 mm an der dünneren Stirnseite auf 4,0 mm an der dickeren Stirnseite ansteigt.

Der dickeren Stirnseite ist vorzugsweise ein umlaufender, radial nach außen weisender Kragen einstückig angeformt.

Zur Anpassung an verschieden lange Drehschieberventile kann vorgesehen sein, zwischen die Spannvorrichtung und die Nabe einen Adapter einzusetzen, der die Länge der Vorrichtung anpasst. Dazu ist es vorteilhaft, gleich lange Adapterstücke für die Zugstangen vorzusehen.

Schließlich ist eine Anpassung der Vorrichtung an unterschiedliche Ausgangsschaftlängen mit einer Einsatzhülse für den gegenüber der Spannplatte liegenden beweglichen Maschinenteil möglich.

Nachfolgend werden Ausführungsbeispiele der vorliegenden Erfindung anhand der Zeichnung beschrieben. Es zeigen:
- Fig. 1:: die dem Eingangsschaft eines Servoventils zugewandte Nabe mit einer Spannvorrichtung in einer schematischen perspektivischen Explosionsdarstellung;
- Fig. 1a:: die Nabe aus Fig. 1 in einer anderen Perspektive;
- Fig. 2:: eine Vorrichtung nach dem Stand der Technik in einer Darstellung entsprechend Fig. 1;
- Fig. 3:: Eine Vorrichtung ähnlich Fig. 1 mit einem Adapter für größere Drehschieberventillängen;
- Fig. 4:: der stirnseitige Flansch der Nabe aus Fig. 1 in einem Schnitt von der Seite;
- Fig. 5:: die Vorrichtung mit gespanntem Drehschieberventil im Betrieb in einem Schnitt von der Seite; sowie
- Fig. 6:: die Vorrichtung mit gespanntem Drehschieberventil in einer Ansicht gem. Fig. 5 mit beidseitig eingesetzten Adaptern zur Längenanpassung.

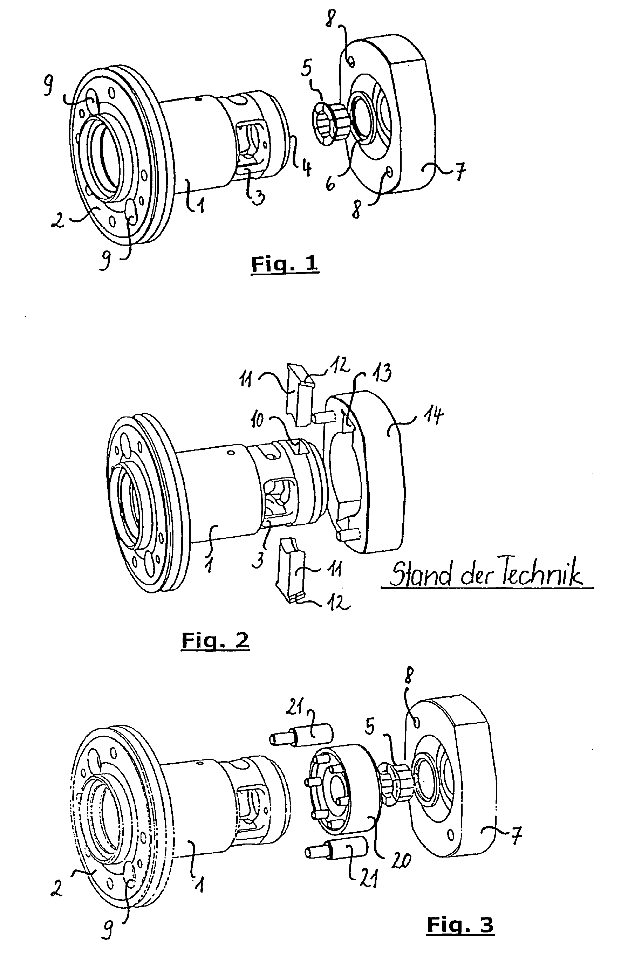

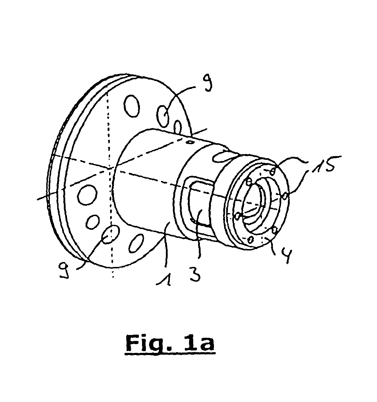

In der Figur 1 ist die dem Eingangsschaft des Servoventils zugewandte Nabe mit einer Spannvorrichtung in einer schematischen Explosionsdarstellung perspektivisch gezeichnet. Die Nabe 1 weist einen stirnseitigen Flansch 2 für die Befestigung an einem Grundkörper auf. An ihrem freien Ende weist die Nabe 1 einen Durchbruch 3 und einen weiteren stirnseitigen Flansch 4 auf, der zur Befestigung einer Spannzange 5 dient. Die Spannzange 5 wird mit einem Ring 6 an dem Flansch 4 befestigt.
Eine Spannplatte 7 umgreift die Spannzange 5. Die Spannplatte 7 weist zwei symmetrisch zu ihrer Mittenachse angeordnete Bohrungen 8 für die Befestigung von Zugstangen auf. Die Bohrungen 8 fluchten mit Bohrungen 9 in der Nabe 1, die für den Durchgang der Zugstangen dort angeordnet sind.

Fig. 1a zeigt die Nabe aus Fig. 1 in einer anderen Perspektive, aus der Bohrungen 15 zur Befestigung eines Adapterringes oder einer Spannvorrichtung an der Stirnseite 4 erkennbar sind.

In der Figur 2 ist der Stand der Technik veranschaulicht, von dem die vorliegende Erfindung ausgeht. Im Stand der Technik ist die Nabe 1 in einem hinter den Durchbrüchen 3 liegenden Abschnitt mit Radialführungen 10 versehen, in welche in Radialrichtung bewegliche Schieber 11 eingesetzt werden. Die Schieber 11 weisen eine schräg zu der Mittenachse der Nabe 1 verlaufende T-förmige Führung 12 auf, die jeweils in eine entsprechende T-förmige Nute 13 einzuführen sind. Die Nuten 13 sind in einer Spannplatte 14 angeordnet, die bei axialer Betätigung durch Zugstangen eine radiale Zustellung der Schieber 11 bewirkt.

Die Figur 3 zeigt eine erfindungsgemäße Anordnung entsprechend Figur 1, die mit einem Adapterring 20 sowie mit zwei Zugstangenadaptern 21 an eine andere Werkstückgröße angepasst ist.

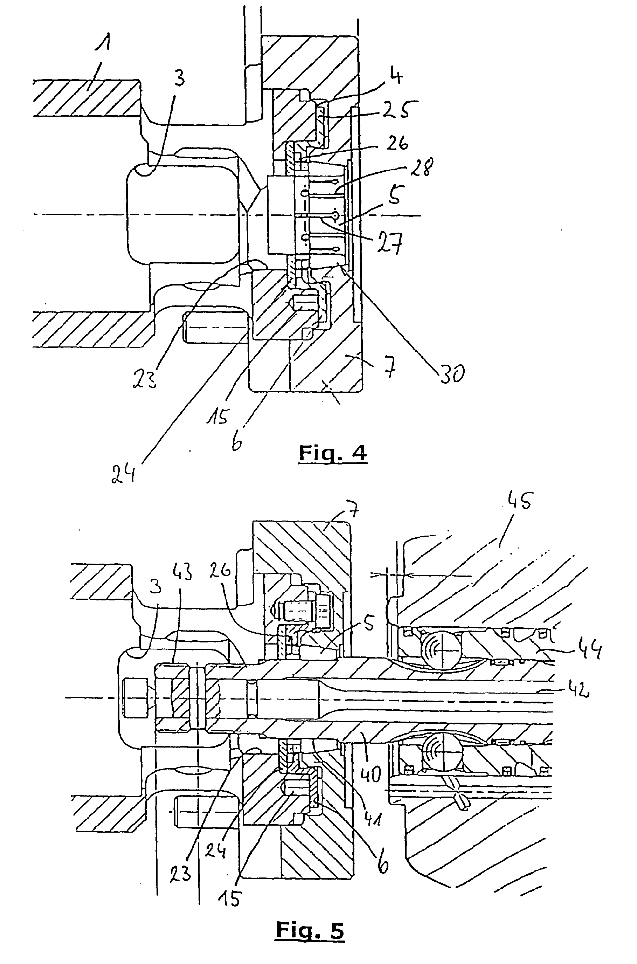

In der Figur 4 ist der stirnseitige Flansch 4 der Nabe 1 in einem Schnitt von der Seite dargestellt.

Der Flansch 4 hat stirnseitig insgesamt sechs Gewindebohrungen 15, die in gleichem Winkelabstand symmetrisch um die Mittenachse verteilt sind. In der Darstellung der Figur 4 ist nur eine Gewindebohrung 15 sichtbar. Die Nabe 1 ist innen hohl ausgeführt und weist insbesondere ihrer Stirnseite 4 zugewandt eine Durchgangsbohrung 23 auf, die für die Aufnahme der Spannzange 5 vorbereitet ist. Die Spannzange 5 wird mit einer Sitzplatte 24 und einem Befestigungsring 25 auf die Stirnseite 4 der Nabe 1 geschraubt. Dabei ist die Spannzange 5 an ihrem der Sitzplatte 24 zugewandten Ende mit einem radial nach außen gewandten umlaufenden Kragen 26 versehen, der die Spannzange 5 unverlierbar zwischen der Sitzplatte 24 und dem Befestigungsring 25 hält, aber eine geringfügige radiale Beweglichkeit sicherstellt.

Die Spannzange 5 selbst ist hülsenförmig ausgeführt und mit ihrer äußeren Umfangsfläche konisch, wobei die dickere Wandstärke dem Kragen 26 zugewandt ist und die sich verjüngende, dünnere Wandstärke dem Kragen 26 abgewandt ist. Die innere Matelfläche ist zylindrisch. Entlang ihres Umfangs weist die Spannzange 5 Schlitze 27 und 28 auf, die abwechselnd von den beiden Stirnflächen her in die Spannzange 5 eingebracht sind. Es sind insgesamt 6 Schlitze von der Kragenseite her eingebracht, die den Grundkörper der Spannzange 5 etwa zu % durchsetzen. Mittig zwischen je zwei von der Kragenseite her eingebrachten Schlitzen 27 befindet sich ein von der verjüngten Stirnseite her eingebrachter Schlitz 28, der die gleiche axiale Tiefe aufweist. Die alternierend angebrachten Schlitze 27 und 28 bilden die Spannzange 5 so aus, dass ein etwa mäanderförmiges Materialband verbleibt.

Die äußere Umfangsfläche der Spannzange 5 ist eine Konusfläche 30, die mit einer inneren Umfangsfläche der Spannplatte 7 in Anlage steht, welche mit gleichem Neigungswinkel ebenfalls konisch ausgeführt ist.

Die Spannplatte 7 ist auf die Spannzange 5 aufgesetzt und in der Axialrichtung beweglich.

Bei einer Axialbewegung auf die Nabe 1 zu gleitet die Spannplatte 7 mit ihrer inneren konischen Umfangsfläche in Axialrichtung auf der äußeren Umfangsfläche 30 der Spannzange 5. Die Keilwirkung der beiden in Anlage befindlichen konischen Oberflächen bewirkt eine Kompression der Spannzange 5 durch elastische Verformung der zwischen den Schlitzen 27 und 28 verbleibenden Materialstränge.

Die Figur 5 zeigt den Querschnitt gemäß Figur 4 im Betrieb. Ein Drehschieberventil ist mit einem Eingangsschaft 40 in der in Figur 4 dargestellten Anordnung aufgenommen, wobei die Spannzange 5 den Eingangsschaft 40 im Bereich eines Lagersitzes 41 erfasst. Im Inneren des an sich bekannten Drehschieberventils ist ein Drehstab 42 angeordnet, der im Bereich einer Verzahnung 43 des Eingangsschafts 40 mit diesem verstiftet wird. Die Figur 5 zeigt insoweit den Zustand des Drehschieberventils nach dem Balancieren und Verstiften.

Der rechte Bereich der Figur 5 zeigt eine Steuerbüchse 44 des Servoventils, die auf dem Drehschieber angeordnet ist. Die Steuerbüchse 44 ist umgeben von einem weiteren Maschinenteil 45, das zur hydraulischen Verbindung des Servoventils mit der Balanciervorrichtung dient und das insoweit bekannt ist.

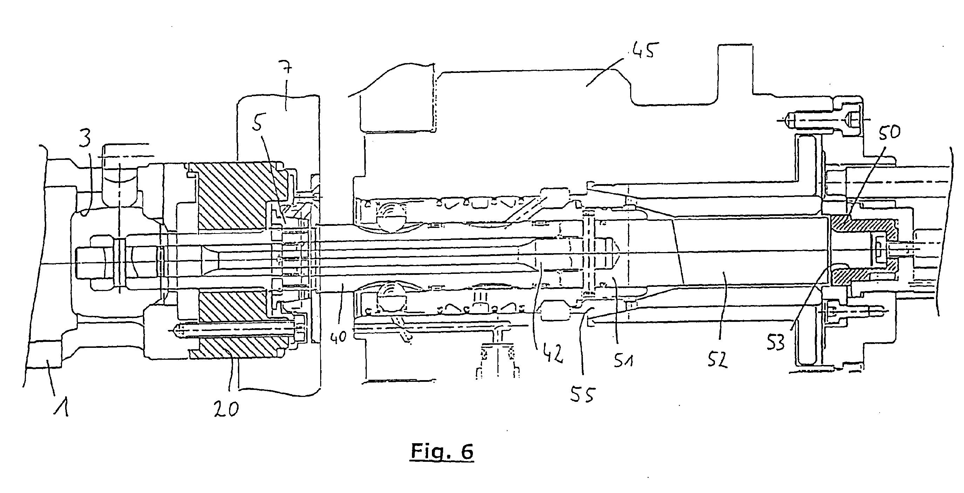

Figur 6 zeigt die Vorrichtung mit gespanntem Drehschieberventil in einer Ansicht gem. Fig. 5 mit beidseitig eingesetzten Adaptern zur Längenanpassung. Es ist ersichtlich, dass der Adapterring 20 einen größeren Axialabstand zwischen dem zu verstiftenden Bereich 43 des Drehschiebers und seinem Lagersitz 41 erlaubt. In gleicher Weise ist eine Einsatzhülse 50 in das Maschinenteil 45 eingesetzt, um dieses an eine gegebene axiale Länge einer Ausgangswelle 51 mit einem Ritzel 52 und einem Lagersitz 53 anzupassen.

In der Praxis wird zum Balancieren und Verstiften des Drehschieberventils zunächst ausgehend von dem in Figur 4 gezeigten Zustand das Drehschieberventil mit seinem Eingangsschaft 40 und dem darin angeordneten Drehstab 42 sowie mit der montierten und mit der Ausgangswelle 51 verstifteten Steuerbüchse 44 so in die Anordnung gemäß Figur 4 eingesetzt, dass der Lagersitz 41 in der Spannzange 5 einliegt. Sodann wird über die Zugstangen, die in den Bohrungen 8 an der Spannplatte 7 angreifen, die Spannplatte 7 auf die Nabe 1 zu und insbesondere gegen die Spannzange 5 gezogen. Die keilförmige Anlagefläche zwischen der Spannplatte 7 und der Spannzange 5 bewirkt eine Kompression der Spannzange 5, so dass diese umfangsseitig flächig an dem Lagersitz 41 der Eingangswelle 40 anliegt und diese drehfest und in Axialrichtung fixiert. Ein Greifer, der in bekannter Weise ebenfalls im Inneren der Nabe 1 angeordnet ist und der in den Figuren nicht dargestellt ist, ergreift das freie Ende des Drehstabs 42.

Über das so fixierte Drehschieberventil wird dann das Maschinenteil 45 gefahren, bis dessen Hydraulikanschlüsse in den vorgesehenen Bereichen der Steuerbüchse 44 liegen. Die Steuerbüchse selbst wird mit einer Spannzange 55 fixiert. Der Anschlag des Maschinenteils 45 bei dieser Zustellbewegung wird im Bereich des anderen Endes des Drehschieberventils, wo das Lenkritzel 52 angeordnet ist, definiert.

Wenn die Balanciervorrichtung soweit geschlossen ist, kann das Servoventil in dem Maschinenteil 45 mit Hydraulikfluid beaufschlagt werden. Der gefasste Drehstab 42 wird dann gegen den Eingangsschaft 40 des Drehschieberventils verdreht und die vom strömenden Fluid aufgebaute Druckdifferenz in den Ausgängen der Steuerbüchse 44 gemessen. Die Mittelstellung des Drehschieberventils ist dann gefunden, wenn die Druckdifferenz zwischen den beiden Ausgängen zu Null wird. In dieser relativ zueinander ermittelten Position wird dann durch die Durchbrüche 3 der Nabe 1 die in Figur 5 gezeigte Bohrung quer durch den Eingangsschaft 40 und den Drehstab 42 eingebracht und ein Stift in diese Bohrung eingepresst. Die Lage von Drehstab 42 und Eingangsschaft 40 ist damit fixiert. Diese Lage bestimmt die sogenannte "hydraulische Mitte" des Drehschieberventils.

Die neuartige Spannvorrichtung mit der Spannzange 5 erlaubt auch einen neuen Verfahrensschritt. Bei dem neuen Verfahren zum Betrieb einer Vorrichtung zum hydraulischen Balancieren ist vorgesehen, dass nach den Schritten Balancieren des Drehschieberventils und Verbinden des Drehstabs 42 mit dem Drehschieber 40 als weiterer Schritt vorgesehen ist, den Eingangsschaft gegenüber dem Ausgangsschaft zur verdrehen, um die Kennlinie des Drehstabs 42 aufzunehmen. Diese Auswertung, die unter anderem prüft, ob der vorgesehene Drehstabtyp verwendet wurde, wird bislang in einer separaten Vorrichtung durchgeführt. Das für diesen Vorgang erforderliche Drehmoment ist erstmals mit der neuen Spannvorrichtung zuverlässig in den Eingangsschaft einzuleiten. Die flächige, über nahezu den gesamten Umfang des Lagersitzes 41 des Eingangsschafts erfolgende Anlage ermöglicht dies auch in Gegenwart von Schmiermitteln.

Die vorliegende Erfindung ist sowohl bei Vorrichtungen zum Balancieren von Drehschieberventilen mittels Hydraulikflüssigkeit als auch bei Vorrichtungen zum Balancieren von Drehschieberventilen mittels Druckluft anwendbar.

## Patentansprüche

1. Vorrichtung zum hydraulischen Balancieren von Drehschieberventilen mit
- einer Nabe (1), die eine Spannvorrichtung (5, 7) zur Erfassung und Spannung eines mit einem Drehschieber,
einem Drehstab (42) und einer Steuerbüchse (44) versehenen Drehschieberventils an einem Lagersitz (41) eines Eingangsschafts (40),
- mit Mitteln zum hydraulischen Beaufschlagen des Drehschieberventils mit Druckfluid, sowie
- mit Mitteln zum Verdrehen und zum Fixieren des Drehschiebers relativ zu der Steuerbüchse,
**dadurch gekennzeichnet, dass** zur Erfassung und Spannung des Eingangsschafts (40) an seinem Lagersitz (41) eine Spannzange (5) vorgesehen ist.

2. Vorrichtung nach Anspruch 1, **dadurch gekennzeichnet, dass** die Spannzange (5) ein im Querschnitt im wesentlichen konischer Ring ist, der von seinen beiden Stirnseiten her in Axialrichtung geschlitzt (27, 28) ist.

3. Vorrichtung nach einem der vorhergehenden Ansprüche,
**dadurch gekennzeichnet, dass** die Spannzange (5) eine Dicke in Axialrichtung von 13 mm aufweist, einen Innendurchmesser von 20 mm und eine Wandstärke, die von 2,5 mm an der dünneren Stirnseite auf 4,0 mm an der dickeren Stirnseite ansteigt.

4. Vorrichtung nach einem der vorhergehenden Ansprüche,
**dadurch gekennzeichnet, dass** die mit größerer Wandstärke versehene Stirnseite einen umlaufenden, radial nach außen weisenden einstückigen Kragen (26) trägt.

5. Vorrichtung nach einem der vorhergehenden Ansprüche,
**dadurch gekennzeichnet, dass** zur Anpassung an verschieden lange Drehschieberventile vorgesehen ist, zwischen die Spannvorrichtung (5, 7) und die Nabe (1) einen Adapter (20) einzusetzen.

6. Vorrichtung nach Anspruch 5, **dadurch gekennzeichnet, dass** gleich lange Adapterstücke (21) für die Spannvorrichtung (5, 7) antreibende Zugstangen vorgesehen sind.

7. Vorrichtung nach einem der vorhergehenden Ansprüche,
**dadurch gekennzeichnet, dass** zur Anpassung der vorrichtung an unterschiedliche Ausgangsschaftlängen eine Einsatzhülse (50) für den gegenüber der Spannplatte (7) liegenden beweglichen Maschinenteil (45) vorgesehen ist.

8. Verfahren zur Aufnahme der Kennlinie eines Drehschieberventils mit folgenden Schritten:
- Erfassen und Spannen eines mit einem Drehschieber, einem Drehstab (42) und einer Steuerbüchse (44) versehenen Drehschieberventils an einem Lagersitz (41) eines Eingangsschafts mit einer Spannzange;
- Beaufschlagen des Drehschieberventils mit Druckfluid;
- Verdrehen des Drehschiebers relativ zu der Steuerbüchse zur Ermittlung der hydraulischen Mittelstellung;
Fixieren des Drehstabes in dem Drehschieber;
- Verdrehen des Eingangsschaftes (40) gegenüber dem Ausgangsschaft (51), um die Kennlinie des Drehstabs (42) aufzunehmen.

## Claims

1. Device for hydraulically balancing rotary slide valves with
- a hub (1), which has a tensioning device (5, 7) for grasping and tensioning a rotary slide valve, provided with a rotary slide, a torsion bar (42), and a control bushing (44), at a bearing seat (41) of an input shaft (40),
- with means for imposing hydraulic pressure on the rotary slide valve with pressure fluid, as well as
- with means for rotating and fixing the rotary slide valve relative to the control bushing,
**characterised in that** a holding clamp (5) is provided for grasping and tensioning the input shaft (40) at its bearing seat (41).

2. Device according to Claim 1, **characterised in that** the holding clamp (5) is a ring which is essentially conical in cross-section and which is slotted (27, 28) in the axial direction from both its face sides.

3. Device according to one of the preceding claims, **characterised in that** the holding clamp (5) has a thickness of 13 mm in the axial direction, an inner diameter of 20 mm, and a wall thickness that increases from 2.5 mm on the thinner face side to 4.0 mm on the thicker face side.

4. Device according to one of the preceding claims, **characterised in that** the face side provided with a greater wall thickness has a single-piece circumferential collar (26) that faces radially outwards.

5. Device according to one of the preceding claims, **characterised in that**, in order to adapt to rotary slide valves of different lengths, an adapter (20) is inserted in between the tensioning device (5, 7) and the hub (1).

6. Device according to Claim 5, **characterised in that** adapter pieces (21) of equal length are provided for the draw rods that drive the tensioning device (5, 7).

7. Device according to one of the preceding claims, **characterised in that**, in order to adapt the device to different output shaft lengths, an insertion sleeve (50) for the moving machine part (45) located opposite the tensioning plate (7) is provided.

8. Method for recording the characteristic curve of a rotary slide valve with the following steps:
- Grasping and tensioning a rotary slide valve, provided with a rotary slide, a torsion bar (42), and a control bushing (44), at a bearing seat (41) of an input shaft, with a holding clamp;
- Imposing pressure fluid onto the rotary slide valve;
- Rotating the rotary slide relative to the control bushing in order to determine the hydraulic centre position;
- Fixing the torsion bar in the rotary slide;
- Rotating the input shaft (40) in relation to the output shaft (51) in order to record the characteristic curve of the torsion bar (42).

## Revendications

1. Dispositif pour l'équilibrage ou le balancement hydraulique de vannes à tiroir rotatif, comprenant
- un moyeu (1), qui porte un dispositif de serrage (5, 7) pour recevoir et serrer une vanne à tiroir rotatif pourvue d'un tiroir rotatif, d'une tige rotative (42) et d'une douille de commande (44), sur une portée de palier (41) d'un arbre d'entrée (40),
- des moyens pour l'alimentation hydraulique de la vanne à tiroir rotatif avec un fluide de pression, ainsi que
- des moyens pour faire tourner et pour fixer le tiroir rotatif par rapport à la douille de commande, **caractérisé en ce que** pour la réception et le serrage de l'arbre d'entrée (40) au niveau de sa portée de palier (41) est prévue une pince de serrage (5).

2. Dispositif selon la revendication 1, **caractérisé en ce que** la pince de serrage (5) est un anneau sensiblement conique en section, qui est fendu dans la direction axiale (27, 28), à partir de ses deux côtés frontaux.

3. Dispositif selon l'une des revendications précédentes, **caractérisé en ce que** la pince de serrage (5) présente une épaisseur de 13 mm dans la direction axiale, un diamètre intérieur de 20 mm, et une épaisseur de paroi, qui augmente de 2,5 mm au niveau du côté frontal le plus mince jusqu'à 4,0 mm au niveau du côté frontal le plus épais.

4. Dispositif selon l'une des revendications précédentes, **caractérisé en ce que** le côté frontal d'épaisseur de paroi la plus grande, porte une collerette périphérique (26) d'un seul tenant, dirigée radialement vers l'extérieur.

5. Dispositif selon l'une des revendications précédentes, **caractérisé en ce que** pour l'adaptation à des vannes à tiroir rotatif de différentes longueurs, il est prévu d'insérer un adaptateur (20) entre le dispositif de serrage (5, 7) et le moyeu (1).

6. Dispositif selon la revendication 5, **caractérisé en ce que** sont prévues des pièces d'adaptation (21) de même longueur pour des tirants entraînant le dispositif de serrage (5, 7).

7. Dispositif selon l'une des revendications précédentes, **caractérisé en ce que** pour l'adaptation du dispositif à différentes longueurs d'arbre de sortie, il est prévu une douille d'insert (50) pour la partie de machine (45) mobile située en regard de la plaque de serrage (7).

8. Procédé pour relever la courbe caractéristique d'une vanne à tiroir rotatif, comprenant les étapes suivantes:
- réception et serrage d'une vanne à tiroir rotatif pourvue d'un tiroir rotatif, d'une tige rotative (42) et d'une douille de commande (44), sur une portée de palier (41) d'un arbre d'entrée, au moyen d'une pince de serrage ;
- alimentation de la vanne à tiroir rotatif avec du fluide de pression ;
- rotation relative du tiroir rotatif par rapport à la douille de commande, pour la détermination de la position centrale hydraulique ;
- fixation de la tige rotative dans le tiroir rotatif ;
- rotation relative de l'arbre d'entrée (40) par rapport à l'arbre de sortie (51), pour relever la courbe caractéristique de la tige rotative (42).
